# EUROPEAN PATENT SPECIFICATION

(11) **EP 2 879 508 B1**
(45) Date of publication and mention of the grant of the patent: **21.08.2019**
(21) Application number: 13742071.7
(22) Date of filing: 02.07.2013
(51) Int. Cl.: A23L 33/115, A23C 9/20

(54) **INFANT FORMULA OR GROWING UP MILK**
SÄUGLINGSNAHRUNG ODER WACHSTUMSMILCH
FORMULE POUR NOURRISSON OU LAIT DE CROISSANCE

(30) Priority: 02.08.2012 US 201213565339
(43) Date of publication of application: 10.06.2015
(73) Proprietor: MJN U.S. Holdings LLC, Chicago, Illinois 60606 (US)
(72) Inventor: GAYGADZHIEV, Zafir, Evansville, Indiana 47715 (US); O'RISKY, Linda, Evansville, Indiana 47712 (US)
(74) Representative: Cawdell, Karen Teresa
(86) International application number: PCT/US2013/049057
(87) International publication number: WO 2014/022051

(56) References cited:
- EP-A2- 0 937 408
- WO-A1-94/02166
- WO-A2-2009/111516
- NL-C2- 1 001 372
- O'KEEFE SEAN., GASKINS-WRIGHT SARA., WILEY VIRGINIA., CHEN I-CHEN.: "LEVELS OF TRANS GEOMETRICAL ISOMERS OF ESSENTIAL FATTY ACIDS IN SOME UNHYDROGENATED U. S. VEGETABLE OILS", JOURNAL OF FOOD LIPIDS, vol. 1, no. 3, 1993, pages 165-176,

## Description

### TECHNICAL FIELD

This disclosure relates generally to a nutritional compositions, such as infant formulas, children's nutritional products and adult nutritional compositions. Comprising a nutritional creamer further comprising a blend of vegetable oils, which provide a suitable fatty acid profile.

### BACKGROUND ART

Nutritional compositions, such as infant formulas, children's nutritional products, and adult nutritional compositions, can provide partial or complete nutrition for infants, children and adults. Such nutritional compositions typically include, among other nutrients, a fat source having an appropriate amount of fat, and more particularly, an appropriate amount of saturated fatty acids, monounsaturated fatty acids, polyunsaturated fatty acids, and trans fatty acids. More particularly, certain fatty acids, such as oleic acid, linoleic acid and α-linolenic acid are generally known to support growth, development and life-long health in humans. Accordingly, there is a need to provide a suitable fat source for a nutritional composition, while maintaining the sensory characteristics of the nutritional composition. A suitable fat source also should be shelf stable and readily incorporated into a nutritional composition.

EP 0 937 408 A2 teaches the production of nutritional compositions which contain 60% monounsaturated fats, 31% polyunsaturated fats as well as protein, carbohydrate and further lipids. Similar compositions are described in WO 2009/111516 and WO 94/02166.

### DISCLOSURE OF THE INVENTION

At its broadest the present invention, which is defined in scope by the claims, discloses a nutritional composition according to claim 1.

The creamer composition component of the nutritional composition comprises a vegetable oil blend that provides the aforementioned fatty acid profile. For example, in certain embodiments, the creamer comprises a vegetable oil blend of canola oil, soybean or sunflower oil, and a high oleic oil. In some embodiments, the creamer composition comprises a vegetable oil blend comprising about 30 to about 70 % by weight of canola oil, about 10 to about 45 % by weight of soybean oil and about 10 to about 50 % by weight of a high oleic oil, while in other embodiments, the creamer composition comprises a vegetable oil blend comprising about 30 to about 70 % by weight of canola oil, about 10 to about 45 % by weight of sunflower oil and about 10 to about 50 % by weight of a high oleic oil. Preferably, the high oleic oil is selected from the group consisting of high oleic sunflower oil, high oleic corn oil, high oleic soybean oil, high oleic canola oil, high oleic safflower oil, and mixtures thereof.

The creamer composition component of the nutritional composition may be provided in a powdered form, such as a spray-dried matrix. The creamer composition optionally comprises at least one of a carrier, a stabilizer, an emulsifier, an antioxidant, a processing aid, and mixtures thereof. For instance, in some embodiments, the composition further comprises corn syrup solids, caseinate, monoglycerides, diglycerides, ascorbyl palmitate, lecithin, mixed tocopherols, maltodextrin, lactose, starch, whey protein concentrate, phosphates, citrates and mixtures thereof.

The creamer compositions are useful for providing a source of fat in various nutritional formulations of the invention, including infant formulas, and children's nutritional products, such as growing-up milks.For example, a nutritional composition in accordance with the present disclosure comprises a protein source, a carbohydrate source, and a fat source comprising a creamer composition as described herein. Preferably, the nutritional composition comprises up to about 50% by weight of the creamer composition. For instance, in some embodiments, the nutritional composition comprises about 5 to about 50% by weight of the creamer composition. More preferably, the nutritional composition comprises about 10 to about 40% by weight of the creamer composition, about 15 to about 30% by weight of the creamer composition, and even more preferably, about 18% to about 27% by weight of the creamer composition, or about 20 to about 25% by weight of the creamer composition.

In certain embodiments, the aforementioned nutritional compositions comprise about 8 to about 19 g of fat, about 50 to about 65 g of carbohydrate, and about 14 to about 25 g of protein per 100 g of the nutritional composition. Furthermore, in certain embodiments, the nutritional compositions comprise about 1 to about 7 g of saturated fats, about 2.5 to about 10 g of monounsaturated fats, about 0.5 to about 10 g of polyunsaturated fats and about 0.1 to 1 g of trans fats per 100 g of the nutritional composition. The nutritional compositions comprise about 0.5 to about 5 g of palmitic acid, about 0.5 to about 2 g of stearic acid, about 1 to about 10g of oleic acid, about 0.5 to about 8 g of linoleic acid, about 0.1 to about 2 g of α-linolenic acid, and about 25 to about 200 mg of docosahexaenoic acid per 100 g of the nutritional composition.

### BEST MODE FOR CARRYING OUT THE INVENTION

"Nutritional composition" means a substance or formulation that satisfies at least a portion of a subject's nutrient requirements. The terms "nutritional(s)", "nutritional formula(s)", "enteral nutritional(s)", "nutritional composition(s)", and "nutritional supplement(s)" are used interchangeably throughout the present disclosure to refer to liquids, powders, gels, pastes, solids, concentrates, suspensions, or ready-to-use forms of enteral formulas, oral formulas, formulas for infants, formulas for pediatric subjects, formulas for children, growing-up milks and/or formulas for adults.

"Infant" means a subject having an age of not more than about one year and includes infants from 0 to 12 months. The term infant includes low birth weight infants, very low birth weight infants, and preterm infants. "Preterm" means an infant born before the end of the 37^{th} week of gestation. The term infant also includes prenatal infants, e.g., infants still *in utero.*

"Child" or "pediatric subject" means a human subject ranging in age from 12 months to about 13 years. In some embodiments, a child is a subject between the ages of 1 and 12 years old. In other embodiments, the terms "children" or "child" refer to subjects that are about one to about six years old, or about seven to about 12 years old. In other embodiments, the terms "children" or "child" refer to any range of ages between about 12 months and about 13 years.

"Children's nutritional product" refers to a composition that satisfies at least a portion of the nutrient requirements of a child. A growing-up milk is an example of a children's nutritional product.

"Infant formula" means a composition that satisfies at least a portion of the nutrient requirements of an infant. In the United States, the content of an infant formula is dictated by the federal regulations set forth at 21 C.F.R. Sections 100, 106, and 107. These regulations define macronutrient, vitamin, mineral, and other ingredient levels in an effort to simulate the nutritional and other properties of human breast milk.

The term "growing-up milk" refers to a broad category of nutritional compositions intended to be used as a part of a diverse diet in order to support the normal growth and development of a child of the ages of about 1 and about 6 years of age.

"Milk-based" means comprising at least one component that has been drawn or extracted from the mammary gland of a mammal. In some embodiments, a milk-based nutritional composition comprises components of milk that are derived from domesticated ungulates, ruminants or other mammals or any combination thereof. Moreover, in some embodiments, milk-based means comprising bovine casein, whey, lactose, or any combination thereof. Further, "milk-based nutritional composition" may refer to any composition comprising any milk-derived or milk-based product known in the art.

"Nutritionally complete" means a composition that may be used as the sole source of nutrition, which would supply essentially all of the required daily amounts of vitamins, minerals, and/or trace elements in combination with proteins, carbohydrates, and lipids. Indeed, "nutritionally complete" describes a nutritional composition that provides adequate amounts of carbohydrates, lipids, essential fatty acids, proteins, essential amino acids, conditionally essential amino acids, vitamins, minerals and energy required to support normal growth and development of a subject.

Therefore, a nutritional composition that is "nutritionally complete" for a preterm infant will, by definition, provide qualitatively and quantitatively adequate amounts of carbohydrates, lipids, essential fatty acids, proteins, essential amino acids, conditionally essential amino acids, vitamins, minerals, and energy required for growth of the preterm infant.

A nutritional composition that is "nutritionally complete" for a term infant will, by definition, provide qualitatively and quantitatively adequate amounts of all carbohydrates, lipids, essential fatty acids, proteins, essential amino acids, conditionally essential amino acids, vitamins, minerals, and energy required for growth of the term infant.

A nutritional composition that is "nutritionally complete" for a child will, by definition, provide qualitatively and quantitatively adequate amounts of all carbohydrates, lipids, essential fatty acids, proteins, essential amino acids, conditionally essential amino acids, vitamins, minerals, and energy required for growth of a child.

As applied to nutrients, the term "essential" refers to any nutrient that cannot be synthesized by the body in amounts sufficient for normal growth and to maintain health and that, therefore, must be supplied by the diet. The term "conditionally essential" as applied to nutrients means that the nutrient must be supplied by the diet under conditions when adequate amounts of the precursor compound is unavailable to the body for endogenous synthesis to occur.

"Probiotic" means a microorganism with low or no pathogenicity that exerts a beneficial effect on the health of the host.

"Prebiotic" means a non-digestible food ingredient that beneficially affects the host by selectively stimulating the growth and/or activity of one or a limited number of beneficial gut bacteria in the digestive tract, selective reduction in gut pathogens, or favorable influence on gut short chain fatty acid profile that can improve the health of the host.

"B-glucan" or "beta-glucan" means all β-glucan, including both β-1,3-glucan and β-1,3;1,6-glucan, as each is a specific type of β-glucan. Moreover, β-1,3;1,6-glucan is a type of β-1,3-glucan. Therefore, the term "β-1,3-glucan" includes β-1,3;1,6-glucan.

All percentages, parts and ratios as used herein are by weight of the total formulation, unless otherwise specified.

The creamer compositions and nutritional compositions of the present disclosure may be substantially free of any optional or selected ingredients described herein. In this context, and unless otherwise specified, the term "substantially free" means that the selected composition may contain less than a functional amount of the optional ingredient, typically less than 0.1% by weight, and also, including zero percent by weight of such optional or selected ingredient.

The disclosure relates to a nutritional compositions, such as infant formulas, children's nutritional products. More particularly, the disclosure relates to a creamer composition for use in children's nutritional products, such as growing-up milks. The vegetable oil blend has an advantageous fatty acid profile that helps support the health of individuals consuming nutritional compositions comprising the creamer composition described herein, while at the same time, maintaining good organoleptic properties when used in a nutritional composition. The vegetable oil blend comprises up to about 15 % by weight of saturated fatty acids, about 45 to about 75 % by weight of monounsaturated fatty acids, about 15 to about 45 % by weight of polyunsaturated fatty acids, and between 0.1 and 3 % by weight of trans fatty acids. In other embodiments, the vegetable oil blend comprises up to about 12% by weight of saturated fatty acids, about 53 to about 67% by weight of monounsaturated fatty acids, about 23 to about 37% by weight of polyunsaturated fatty acids, and up to about 1.5 % by weight of trans fatty acids.

The vegetable oil blend provides suitable amounts of certain fatty acids, including oleic acid, linoleic acid and α-linolenic acid. More particularly, the vegetable oil blend comprises, about 45 to about 70% by weight of oleic acid, about 10 to about 40% by weight of linoleic acid, and about 2 to about 15 % by weight of α-linolenic acid. In other embodiments, the fat blend comprises about 50 to about 70% by weight of oleic acid, about 15 to about 35% by weight of linoleic acid, and about 3 to about 10% by weight of α-linolenic acid. In still other embodiments, the vegetable oil blend comprises the specifications set forth in Table 1:

**Table 1: Vegetable oil blend specifications**

| **component** | **amount (weight %)** |
|---|---|
| Saturated fatty acids | Max 12% |
| Oleic acid (C18:1) | 53% - 67% |
| Linoleic acid (C18:2cc) | 18% - 30% |
| α-Linolenic acid (C18:3ccc) | 5% - 7% |
| Monounsaturated fatty acids | 53% - 67% |
| Polyunsaturated fatty acids | 23% to 37% |
| Trans-fatty acids | Max 1.5% |
| Peroxide value | Max 1.0 meq/kg |
| Free fatty acids (as oleic acid) | Max 0.15% |
| Moisture | Max 0.05% |

The creamer composition comprises a vegetable oil blend that provides a suitable fatty acid profile. Suitable oils include, without limitation, canola, soybean, safflower, palm, palm kernel, corn, sunflower, coconut, olive oil and high oleic oils. In certain embodiments, the vegetable oil blend comprises canola oil, soybean or sunflower oil, and a high oleic oil. More particularly, in certain embodiments, the vegetable oil blend comprises about 30 to about 70 % by weight of canola oil, about 10 to about 45 % by weight of soybean oil and about 10 to about 50 % by weight of a high oleic oil. In other embodiments, the vegetable oil blend comprises about 30 to about 70 % by weight of canola oil, about 10 to about 45 % by weight of sunflower oil and about 10 to about 50 % by weight of a high oleic oil. The high oleic oil in any of these embodiments can be selected from the group consisting of high oleic sunflower oil, high oleic corn oil, high oleic soybean oil, high oleic canola oil, high oleic safflower oil, and mixtures thereof. Preferably, the high oleic oil comprises high oleic sunflower oil. The high oleic oils useful in the present compositions, in certain embodiments, comprise at least about 70% oleic acid, or more particularly at least about 80% oleic acid.

Additional ingredients, such as milk proteins, modified starch, potassium or sodium caseinate, mono or diglycerides, palmitate (e.g., ascorbyl palmitate), lecithin, mixed tocopherols, maltodextrin, lactose, starch, whey protein concentrate, phosphates, citrates, and combinations thereof, may be included in the creamer composition as carriers, stabilizers, emulsifiers, antioxidants and processing aids. In some embodiments, the additional ingredients include, without limitation, corn syrup solids, caseinate (potassium or sodium), monoglycerides, diglycerides, ascorbyl palmitate, lecithin and mixed tocopherols.

The creamer composition may be in a liquid or paste form, or may advantageously be in a powdered form for incorporation into a nutritional compositions. In some embodiments, the creamer composition is provided as a spray-dried matrix. Thus, the powdered creamer composition may advantageously be dry blended with other ingredients to be included in a nutritional composition. The powdered creamer composition preferably has a shelf life of at least 6 months, and more preferably, at least 9 months. In certain embodiments, the creamer has a particles size of 99.5% greater than or equal to U.S. sieve size (USSS) no. 20, and 100% USSS No. 12.

The creamer composition comprises, in certain embodiments, at least about 40% by weight of fat, preferably at least 50 %, and more preferably at least about 55%. In certain embodiments, the creamer comprises about 40 to about 70% by weight of fat, preferably about 50 to about 60% by weight of fat, and more preferably about 55 to about 58 % by weight of fat.

The creamer compositions disclosed herein are useful as a fat source in nutritional formulations, including infant formulas, children's nutritional products, such as growing-up milks, and adult nutritional products. An exemplary nutritional composition in accordance with the present disclosure comprises a protein source, a carbohydrate source, and a fat source comprising a creamer composition disclosed herein. Preferably, the nutritional comprises up to about 50% by weight of the creamer composition, for instance about 5 to about 50% by weight of the creamer composition. More preferably, the nutritional composition comprises about 10 to about 40% by weight of the creamer composition, about 15 to about 30% by weight of the creamer composition, and even more preferably, about 18% to about 27% by weight of the creamer composition, or about 20 to about 25% by weight of the creamer composition. An exemplary nutritional composition comprises about 14 to about 25 g of the protein source, about 50 to about 65 g of the carbohydrate source, and about 5 to about 25 g of the fat source per 100 g of the nutritional composition.

The nutritional composition of the present disclosure comprises, in certain embodiments, the following macronutrient profile: about 1 to about 7 g of saturated fats, about 2.5 to about 10 g of monounsaturated fats, about 0.5 to about 10 g of polyunsaturated fats and about 0.1 to 1 g of trans fats per 100 g of the nutritional composition. Furthermore, the nutritional compositions may comprise, in certain embodiments, about 0.5 to about 5 g of palmitic acid, about 0.5 to about 2 g of stearic acid, about 1 to about 10g of oleic acid, about 0.5 to about 8 g of linoleic acid, about 0.1 to about 2 g of α-linolenic acid, and about 25 to about 200 mg of docosahexaenoic acid per 100 g of the nutritional composition.

The fatty acid profile of nutritional compositions comprising the creamer described herein comprises, in certain embodiments, about 12 to about 19 g of total fat per 100 g, about 2 to about 5 g of saturated fat per 100 g, about 1 to about 5 g of linoleic acid per 100 g, about 0.5 to about 1 g of α-linolenic acid per 100 g, about 2 to about 5 g of polyunsaturated fatty acids per 100 g, and about 0.2 to about 0.5 g of trans fatty acids per 100g. In particular embodiments, the nutritional composition has the following fatty acid profile: about 15 to about 17 g of total fat per 100g, about 3.7 to about 3.8 g of saturated fat per 100 g, about 2.7 to about 3.3 g of linoleic acid per 100 g, about 0.7 to about 0.8 g of α-linolenic acid per 100 g, about 3.5 to about 4.3 g of polyunsaturated fatty acids per 100 g, and about 0.3 to about 0.4 g of trans fatty acids per 100g.

The fatty acid profile of a nutritional composition of the present disclosure can further be expressed in terms of percentage of total energy of the composition. For example, a nutritional composition comprising the creamer composition of the present disclosure comprises, in some embodiments, the following fatty acid profile as a percentage of total energy: about 20 to about 40% total fat, 10% or less of saturated fatty acids, 10% or less of polyunsaturated fatty acids, about 4 to about 8% of linoleic acid, about 1 to about 2% α-linolenic acid, and 1% or less of trans fatty acids. In particular embodiments, a children's nutritional product, such as a growing up milk intended for a child of the age of 1 to 3 years comprises about 30 to about 40% total energy from fat, while a nutritional product intended for a child of the age of 4 to 6 years comprises about 20 to about 35% total energy from fat. The improved fatty acid profile of a nutritional composition of the present disclosure compared to that of commercially available growing-up milk products, is provided in Table 2.

**Table 2. Fatty acid profile (% total energy)**

| **Macronutrient** | **Present disclosure** | **Product 1** | **Product 2** | **Product 3** | **Product 4** |
|---|---|---|---|---|---|
| **Total fat** | 20-40 | 33.5 | 36.1 | 34.1 | 31.2 |
| **Saturated fatty acids** | ≤10 | 17.5 | 20.1 | 23.8 | 14.5 |
| **Polyunsaturated fatty acids** | ≤10 | 4.4 | 3.7 | 0.5 | 3.7 |
| **Linoleic acid** | 4-8 | 3.8 | 3.0 | 0.2 | 3.2 |
| **α-linolenic acid** | 1-2 | 0.5 | 0.6 | 0.1 | 0.5 |
| **Trans fatty acids** | ≤1 | <0.1 | <0.1 | <0.1 | <0.1 |

The disclosed nutritional composition(s) may be provided in any form known in the art, such as a powder, a gel, a suspension, a paste, a solid, a liquid, a liquid concentrate, a reconstitutable powdered milk substitute or a ready-to-use product. The nutritional composition may, in certain embodiments, comprise a nutritional supplement, children's nutritional product, infant formula, human milk fortifier, growing-up milk or any other nutritional composition designed for a pediatric subject. Nutritional compositions of the present disclosure include, for example, orally-ingestible, health-promoting substances including, for example, foods, beverages, tablets, capsules and powders. Moreover, the nutritional composition of the present disclosure may be standardized to a specific caloric content, it may be provided as a ready-to-use product, or it may be provided in a concentrated form. In some embodiments, the nutritional composition is in powder form with a particle size in the range of 5 µm to 1500 µm, more preferably in the range of 10 µm to 1000µm, and even more preferably in the range of 50 µm to 300µm.

The disclosure provides a children's nutritional product, more particularly, a growing-up milk designed for children ages 1-3 years and/or 4-6 years, wherein the growing-up milk supports growth and development and life-long health. The disclosure also provides an infant formula suitable for infants ranging in age from 0 to 12 months, or from 0 to 3 months, 0 to 6 months or 6 to 12 months.

Suitable fat or lipid sources, in additional to the creamer compositions describe herein, may also be included. Such sources include but are not limited to, animal sources, e.g., milk fat, butter, butter fat, egg yolk lipid; marine sources, such as fish oils, marine oils, single cell oils; vegetable and plant oils, such as corn oil, canola oil, sunflower oil, soybean oil, palm olein oil, coconut oil, high oleic sunflower oil, evening primrose oil, rapeseed oil, olive oil, flaxseed (linseed) oil, cottonseed oil, high oleic safflower oil, palm stearin, palm kernel oil, wheat germ oil; medium chain triglyceride oils and emulsions and esters of fatty acids; and any combinations thereof.

Carbohydrate sources can be any used in the art, e.g., lactose, glucose, fructose, corn syrup solids, maltodextrins, sucrose, starch, rice syrup solids, and the like. The amount of carbohydrate in the nutritional composition typically can vary from between about 5 g and about 25 g/100 kcal.

The nutritional composition(s) of the disclosure also comprise a protein source. The protein source can be any used in the art, e.g., nonfat milk, whey protein, casein, soy protein, hydrolyzed protein, amino acids, and the like. Bovine milk protein sources useful in practicing the present disclosure include, but are not limited to, milk protein powders, milk protein concentrates, milk protein isolates, nonfat milk solids, nonfat milk, nonfat dry milk, whey protein, whey protein isolates, whey protein concentrates, sweet whey, acid whey, casein, acid casein, caseinate (*e.g.* sodium caseinate, sodium calcium caseinate, calcium caseinate) and any combinations thereof.

In one embodiment, the proteins of the nutritional composition are provided as intact proteins. In other embodiments, the proteins are provided as a combination of both intact proteins and partially hydrolyzed proteins. In certain other embodiments, the proteins are more completely hydrolyzed. In still other embodiments, the protein source comprises amino acids. In yet another embodiment, the protein source may be supplemented with glutamine-containing peptides.

In a particular embodiment of the nutritional composition, the whey:casein ratio of the protein source is similar to that found in human breast milk. In an embodiment, the protein source comprises from about 40% to about 80% whey protein and from about 20% to about 60% casein. The amount of protein can typically vary from about 1 g and about 7 g of a protein source per 100 kcal.

In one embodiment, the nutritional composition may contain one or more probiotics. Any probiotic known in the art may be acceptable in this embodiment. In a particular embodiment, the probiotic may be selected from any *Lactobacillus* species, *Lactobacillus rhamnosus* GG (ATCC number 53103), *Bifidobacterium* species, *Bifidobacterium longum,* and *Bifidobacterium animalis subsp. lactis* BB-12 (DSM No. 10140) or any combination thereof.

If included in the composition, the amount of the probiotic may vary from about 1 x 10⁴ to about 1 x 10¹⁰ colony forming units (cfu) per kg body weight per day. In another embodiment, the amount of the probiotic may vary from about 10⁶ to about 10¹⁰ cfu per kg body weight per day. In still another embodiment, the amount of the probiotic may vary from about 10⁷ to about 10⁹ cfu per kg body weight per day. In yet another embodiment, the amount of the probiotic may be at least about 10⁶ cfu per kg body weight per day.

In an embodiment, the probiotic(s) may be viable or non-viable. As used herein, the term "viable", refers to live microorganisms. The term "non-viable" or "non-viable probiotic" means non-living probiotic microorganisms, their cellular components and/or metabolites thereof. Such non-viable probiotics may have been heat-killed or otherwise inactivated, but they retain the ability to favorably influence the health of the host. The probiotics useful in the present disclosure may be naturally-occurring, synthetic or developed through the genetic manipulation of organisms, whether such new source is now known or later developed.

The nutritional composition may also contain one or more prebiotics in certain embodiments. Such prebiotics may be naturally-occurring, synthetic, or developed through the genetic manipulation of organisms and/or plants, whether such new source is now known or developed later. Prebiotics useful in the present disclosure may include oligosaccharides, polysaccharides, and other prebiotics that contain fructose, xylose, soya, galactose, glucose and mannose.

More specifically, prebiotics useful in the present disclosure may include polydextrose, polydextrose powder, lactulose, lactosucrose, raffinose, gluco-oligosaccharide, inulin, fructo-oligosaccharide (also called oligofructose), isomalto-oligosaccharide, soybean oligosaccharides, lactosucrose, xylo-oligosaccharide, chito-oligosaccharide, manno-oligosaccharide, aribino-oligosaccharide, siallyl-oligosaccharide, fuco-oligosaccharide, galacto-oligosaccharide, and gentio-oligosaccharides.

In an embodiment, the total amount of prebiotics present in the nutritional composition may be from about 1.0 g/L to about 10.0 g/L of the composition. At least 20% of the prebiotics can comprise galacto-oligosaccharide, polydextrose or a mixture thereof. The amount of each of galacto-oligosaccharide and/or polydextrose in the nutritional composition may, in an embodiment, be within the range of from about 1.0 g/L to about 4.0 g/L.

The nutritional composition of the disclosure may contain a source of long chain polyunsaturated fatty acid (LCPUFA) that comprises docosahexaenoic acid. Other suitable LCPUFAs include, but are not limited to, α-linoleic acid, γ-linoleic acid, linoleic acid, linolenic acid, eicosapentaenoic acid (EPA) and arachidonic acid (ARA).

In an embodiment, especially if the nutritional composition is an infant formula, the nutritional composition is supplemented with both DHA and ARA. In this embodiment, the weight ratio of ARA:DHA may be between about 1:3 and about 9:1. In a particular embodiment, the ratio of ARA:DHA is from about 1:2 to about 4:1.

The nutritional composition may be supplemented with oils containing DHA and/or ARA using standard techniques known in the art. For example, DHA and ARA may be added to the composition by replacing an equivalent amount of an oil, such as high oleic sunflower oil, normally present in the composition. As another example, the oils containing DHA and ARA may be added to the composition by replacing an equivalent amount of the rest of the overall fat blend normally present in the composition without DHA and ARA. In certain embodiments, the formulation comprises DHA.

If included, the source of DHA and/or ARA may be any source known in the art such as marine oil, fish oil, single cell oil, egg yolk lipid, and brain lipid. In some embodiments, the DHA and ARA are sourced from single cell Martek oils, DHASCO® and ARASCO®, or variations thereof. The DHA and ARA can be in natural form, provided that the remainder of the LCPUFA source does not result in any substantial deleterious effect on the subject. Alternatively, the DHA and ARA can be used in refined form.

In an embodiment, sources of DHA and ARA are single cell oils as taught in U.S. Pat. Nos. 5,374,657; 5,550,156; and 5,397,591, the disclosures of which are incorporated herein in their entirety by reference. Nevertheless, the present disclosure is not limited to only such oils.

The nutritional composition may also comprise a source of β-glucan. Glucans are polysaccharides, specifically polymers of glucose, which are naturally occurring and may be found in cell walls of bacteria, yeast, fungi, and plants. Beta glucans (β-glucans) are themselves a diverse subset of glucose polymers, which are made up of chains of glucose monomers linked together via beta-type glycosidic bonds to form complex carbohydrates.

β-1,3-glucans are naturally occurring polysaccharides, with or without β-1,6-glucose side chains that are found in the cell walls of a variety of plants, yeasts, fungi and bacteria. (Stone BA, Clarke AE. Chemistry and Biology of (1-3)-Beta-Glucans. London:Portland Press Ltd; 1993.) β-1,3;1,6-glucans are those containing glucose units with (1,3) links having side chains attached at the (1,6) position(s). β-1,3;1,6 glucans are a heterogeneous group of glucose polymers that share structural commonalities, including a backbone of straight chain glucose units linked by a β-1,3 bond with β-1,6-linked glucose branches extending from this backbone. While this is the basic structure for the presently described class of β-glucans, some variations may exist. The chemical structure of β-1,3-glucan depends on the source of the b-1,3-glucan. Moreover, various physiochemical parameters, such as solubility, primary structure, molecular weight, and branching, play a role in biological activities of b-1,3-glucans. (Yadomae T., Structure and biological activities of fungal beta-1,3-glucans. Yakugaku Zasshi. 2000;120:413-431.) For example, certain yeast β-glucans have additional regions of β(1,3) branching extending from the β(1,6) branches, which add further complexity to their respective structures.

β-glucans derived from baker's yeast, *Saccharomyces cerevisiae,* are made up of chains of D-glucose molecules connected at the 1 and 3 positions, having side chains of glucose attached at the 1 and 6 positions. Yeast-derived β-glucan is an insoluble, fiber-like, complex sugar having the general structure of a linear chain of glucose units with a β-1,3 backbone interspersed with β-1,6 side chains that are generally 6-8 glucose units in length. More specifically, β-glucan derived from baker's yeast is poly-(1,6)-β-D-glucopyranosyl-(1,3)-β-D-glucopyranose.

Furthermore, β-glucans are well tolerated and do not produce or cause excess gas, abdominal distension, bloating or diarrhea in pediatric subjects. Addition of β-glucan to a nutritional composition for a pediatric subject, such as an infant formula, a growing-up milk or another children's nutritional product, will improve the subject's immune response by increasing resistance against invading pathogens and therefore maintaining or improving overall health.

In an embodiment, the nutritional composition(s) of the present disclosure comprises choline. Choline is a nutrient that is essential for normal function of cells. It is a precursor for membrane phospholipids, and it accelerates the synthesis and release of acetylcholine, a neurotransmitter involved in memory storage. Moreover, though not wishing to be bound by this or any other theory, it is believed that dietary choline and docosahexaenoic acid (DHA) act synergistically to promote the biosynthesis of phosphatidylcholine and thus help promote synaptogenesis in human subjects. Additionally, choline and DHA may exhibit the synergistic effect of promoting dendritic spine formation, which is important in the maintenance of established synaptic connections. In some embodiments, the nutritional composition(s) of the present disclosure includes about 40 mg choline per serving to about 100 mg per 8 oz. serving.

In an embodiment, the nutritional composition comprises a source of iron. In an embodiment, the source of iron is ferric pyrophosphate, ferric orthophosphate, ferrous fumarate or a mixture thereof and the source of iron may be encapsulated in some embodiments.

One or more vitamins and/or minerals may also be added in to the nutritional composition in amounts sufficient to supply the daily nutritional requirements of a subject. It is to be understood by one of ordinary skill in the art that vitamin and mineral requirements will vary, for example, based on the age of the child. For instance, an infant may have different vitamin and mineral requirements than a child between the ages of one and thirteen years. Thus, the embodiments are not intended to limit the nutritional composition to a particular age group but, rather, to provide a range of acceptable vitamin and mineral components.

In embodiments providing a nutritional composition for a child, the composition may optionally include, but is not limited to, one or more of the following vitamins or derivations thereof: vitamin B₁ (thiamin, thiamin pyrophosphate, TPP, thiamin triphosphate, TTP, thiamin hydrochloride, thiamin mononitrate), vitamin B₂ (riboflavin, flavin mononucleotide, FMN, flavin adenine dinucleotide, FAD, lactoflavin, ovoflavin), vitamin B₃ (niacin, nicotinic acid, nicotinamide, niacinamide, nicotinamide adenine dinucleotide, NAD, nicotinic acid mononucleotide, NicMN, pyridine-3-carboxylic acid), vitamin B₃-precursor tryptophan, vitamin B₆ (pyridoxine, pyridoxal, pyridoxamine, pyridoxine hydrochloride), pantothenic acid (pantothenate, panthenol), folate (folic acid, folacin, pteroylglutamic acid), vitamin B₁₂ (cobalamin, methylcobalamin, deoxyadenosylcobalamin, cyanocobalamin, hydroxycobalamin, adenosylcobalamin), biotin, vitamin C (ascorbic acid), vitamin A (retinol, retinyl acetate, retinyl palmitate, retinyl esters with other long-chain fatty acids, retinal, retinoic acid, retinol esters), vitamin D (calciferol, cholecalciferol, vitamin D₃, 1,25,-dihydroxyvitamin D), vitamin E (α-tocopherol, α-tocopherol acetate, α-tocopherol succinate, α-tocopherol nicotinate, α-tocopherol), vitamin K (vitamin K₁, phylloquinone, naphthoquinone, vitamin K₂, menaquinone-7, vitamin K₃, menaquinone-4, menadione, menaquinone-8, menaquinone-8H, menaquinone-9, menaquinone-9H, menaquinone-10, menaquinone-11, menaquinone-12, menaquinone-13), choline, inositol, β-carotene and any combinations thereof.

In embodiments providing a children's nutritional product, such as a growing-up milk, the composition may optionally include, but is not limited to, one or more of the following minerals or derivations thereof: boron, calcium, calcium acetate, calcium gluconate, calcium chloride, calcium lactate, calcium phosphate, calcium sulfate, chloride, chromium, chromium chloride, chromium picolonate, copper, copper sulfate, copper gluconate, cupric sulfate, fluoride, iron, carbonyl iron, ferric iron, ferrous fumarate, ferric orthophosphate, iron trituration, polysaccharide iron, iodide, iodine, magnesium, magnesium carbonate, magnesium hydroxide, magnesium oxide, magnesium stearate, magnesium sulfate, manganese, molybdenum, phosphorus, potassium, potassium phosphate, potassium iodide, potassium chloride, potassium acetate, selenium, sulfur, sodium, docusate sodium, sodium chloride, sodium selenate, sodium molybdate, zinc, zinc oxide, zinc sulfate and mixtures thereof. Non-limiting exemplary derivatives of mineral compounds include salts, alkaline salts, esters and chelates of any mineral compound.

The minerals can be added to growing-up milks or to other children's nutritional compositions in the form of salts such as calcium phosphate, calcium glycerol phosphate, sodium citrate, potassium chloride, potassium phosphate, magnesium phosphate, ferrous sulfate, zinc sulfate, cupric sulfate, manganese sulfate, and sodium selenite. Additional vitamins and minerals can be added as known within the art.

In an embodiment, the children's nutritional composition may contain between about 10 and about 50% of the maximum dietary recommendation for any given country, or between about 10 and about 50% of the average dietary recommendation for a group of countries, per serving of vitamins A, C, and E, zinc, iron, iodine, selenium, and choline. In another embodiment, the children's nutritional composition may supply about 10 - 30% of the maximum dietary recommendation for any given country, or about 10 - 30% of the average dietary recommendation for a group of countries, per serving of B-vitamins. In yet another embodiment, the levels of vitamin D, calcium, magnesium, phosphorus, and potassium in the children's nutritional product may correspond with the average levels found in milk. In other embodiments, other nutrients in the children's nutritional composition may be present at about 20% of the maximum dietary recommendation for any given country, or about 20% of the average dietary recommendation for a group of countries, per serving.

The children's nutritional composition of the present disclosure may optionally include one or more of the following flavoring agents, including, but not limited to, flavored extracts, volatile oils, cocoa or chocolate flavorings, peanut butter flavoring, cookie crumbs, vanilla or any commercially available flavoring. Examples of useful flavorings include, but are not limited to, pure anise extract, imitation banana extract, imitation cherry extract, chocolate extract, pure lemon extract, pure orange extract, pure peppermint extract, honey, imitation pineapple extract, imitation rum extract, imitation strawberry extract, or vanilla extract; or volatile oils, such as balm oil, bay oil, bergamot oil, cedarwood oil, cherry oil, cinnamon oil, clove oil, or peppermint oil; peanut butter, chocolate flavoring, vanilla cookie crumb, butterscotch, toffee, and mixtures thereof. The amounts of flavoring agent can vary greatly depending upon the flavoring agent used. The type and amount of flavoring agent can be selected as is known in the art.

The nutritional compositions of the present disclosure may optionally include one or more emulsifiers that may be added for stability of the final product. Examples of suitable emulsifiers include, but are not limited to, lecithin (*e.g.,* from egg or soy), alpha lactalbumin and/or mono- and di-glycerides, and mixtures thereof. Other emulsifiers are readily apparent to the skilled artisan and selection of suitable emulsifier(s) will depend, in part, upon the formulation and final product.

The nutritional compositions of the present disclosure may optionally include one or more preservatives that may also be added to extend product shelf life. Suitable preservatives include, but are not limited to, potassium sorbate, sodium sorbate, potassium benzoate, sodium benzoate, calcium disodium EDTA, and mixtures thereof.

The nutritional compositions of the present disclosure may optionally include one or more stabilizers. Suitable stabilizers for use in practicing the nutritional composition of the present disclosure include, but are not limited to, gum arabic, gum ghatti, gum karaya, gum tragacanth, agar, furcellaran, guar gum, gellan gum, locust bean gum, pectin, low methoxyl pectin, gelatin, microcrystalline cellulose, CMC (sodium carboxymethylcellulose), methylcellulose hydroxypropyl methyl cellulose, hydroxypropyl cellulose, DATEM (diacetyl tartaric acid esters of mono- and diglycerides), dextran, carrageenans, and mixtures thereof.

The nutritional compositions of the disclosure may provide minimal, partial or total nutritional support. The compositions may be nutritional supplements or meal replacements. The compositions may, but need not, be nutritionally complete. In an embodiment, the nutritional composition of the disclosure is nutritionally complete and contains suitable types and amounts of lipid, carbohydrate, protein, vitamins and minerals. The amount of lipid or fat typically can vary from about 2 to about 7 g/100 kcal. The amount of protein typically can vary from about 1 to about 5 g/100 kcal. The amount of carbohydrate typically can vary from about 8 to about 14 g/100 kcal.

In some embodiments, the nutritional composition of the present disclosure is a growing-up milk. Growing-up milks are fortified milk-based beverages intended for children over 1 year of age (typically from 1-6 years of age). Growing-up milks are designed with the intent to serve as a complement to a diverse diet to provide additional insurance that a child achieves continual, daily intake of all essential vitamins and minerals, macronutrients plus additional functional dietary components, such as non-essential nutrients that have purported health-promoting properties.

The exact composition of an infant formula or a growing-up milk or other nutritional composition according to the present disclosure can vary from market-to-market, depending on local regulations and dietary intake information of the population of interest, while remaining within the scope of the claims. In some embodiments, nutritional compositions according to the disclosure consist of a milk protein source, such as whole or skim milk, plus added sugar and sweeteners to achieve desired sensory properties, and added vitamins and minerals. The fat composition is typically derived from the milk raw materials. Total protein can be targeted to match that of human milk, cow milk or a lower value. Total carbohydrate is usually targeted to provide as little added sugar, such as sucrose or fructose, as possible to achieve an acceptable taste. Typically, Vitamin A, calcium and Vitamin D are added at levels to match the nutrient contribution of regional cow milk. Otherwise, in some embodiments, vitamins and minerals can be added at levels that provide approximately 20% of the dietary reference intake (DRI) or 20% of the Daily Value (DV) per serving. Moreover, nutrient values can vary between markets depending on the identified nutritional needs of the intended population, raw material contributions and regional regulations.

All references to singular characteristics or limitations of the present disclosure shall include the corresponding plural characteristic or limitation, and vice versa, unless otherwise specified or clearly implied to the contrary by the context in which the reference is made.

All combinations of method or process steps as used herein can be performed in any order, unless otherwise specified or clearly implied to the contrary by the context in which the referenced combination is made.

The methods and compositions of the present disclosure, including components thereof, can comprise, consist of, or consist essentially of the essential elements and limitations of the embodiments described herein, as well as any additional or optional ingredients, components or limitations described herein or otherwise useful in nutritional compositions.

Examples are provided to illustrate some embodiments of the nutritional composition of the present disclosure but should not be interpreted as any limitation thereon. Other embodiments within the scope of the claims herein will be apparent to one skilled in the art from the consideration of the specification or practice of the nutritional composition or methods disclosed herein. It is intended that the specification, together with the example, be considered to be exemplary only, with the scope and spirit of the disclosure being indicated by the claims which follow the examples.

### EXAMPLES

An example of a children's nutritional composition comprising the creamer composition described herein, such as a fortified milk-based growing-up milk, comprises a protein source, a carbohydrate source, a fat source comprising the creamer composition described herein, and additional ingredients, such as fructooligosaccharide, inulin, DHA, beta-glucan and various vitamins, minerals and other micronutrients. More particularly, a growing-up milk in accordance with the present disclosure comprises the ingredients listed in Table 3:

**Table 3. Exemplary growing-up milk ingredients**

| **Quantity (Kg)** | **Ingredient** |
|---|---|
| 48.00 | Milk buttermilk powder |
| 28.12 | Corn syrup solids |
| 18.00 | Nutritional creamer composition |
| 2.10 | Oligofructose |
| 2.10 | Inulin |
| 0.50 | Calcium carbonate |
| 0.58 | Marine oil powder (DHA) |
| 0.19 | Vitamin premix with taurine and iodide |
| 0.27 | Iron trituration |
| 0.04 | Choline bitartrate |
| 0.05 | Minerals |
| 0.03 | Baker's yeast beta glucan |

An exemplary growing milk comprising a nutritional creamer has the nutritional profile summarized in Table 4:

**Table 4. Nutritional profile of a growing-up milk**

| Nutrient | Amount per 100 g |
|---|---|
| Calories | 440 |
| Total fat | 16.5 g |
| Saturated fat | 3.8 g |
| Linoleic acid | 3.0 g |
| α-linolenic acid | 0.8 g |
| Polyunsaturated fatty acids | 3.8 g |
| Trans fatty acids | 0.3 g |
| Protein | 16.4 g |
| Carbohydrate | 59.7 g |
| Total sugars | 35.9 g |

## Claims

1. A nutritional composition, wherein the nutritional composition comprises a growing-up milk or an infant formula, comprising:
a protein source,
a carbohydrate source, and
a lipid source, wherein the lipid source comprises a creamer composition, the creamer composition further comprising a vegetable oil blend comprising up to 15% by weight of saturated fatty acids, 45 to 75% by weight of monounsaturated fatty acids, 15 to 45 % by weight of polyunsaturated fatty acids, and 0.1% to 3 % by weight of trans fatty acids, wherein the vegetable oil blend further comprises 45 to 75% by weight of oleic acid, 10 to 40% by weight linoleic acid and 1 to 15% by weight of α-linolenic acid; and further wherein the nutritional composition comprises:
0.5 to 5 g of palmitic acid,
0.5 to 2 g of stearic acid,
1 to 10 g of oleic acid,
0.5 to 8 g of linoleic acid,
0.1 to 2 g α-linolenic acid,
and 25 to 200 mg of docosahexaenoic acid per 100 g of the nutritional composition.

2. The nutritional composition of claim 1 further comprising an additional ingredient selected from the group consisting of a carrier, a stabilizer, an emulsifier, an antioxidant, a processing aid, and mixture thereof, preferably wherein the additional ingredient is selected from the group consisting of milk proteins, modified starch, potassium or sodium caseinate, mono or diglycerides, ascorbyl palmitate, lecithin, mixed tocopherols, maltodextrin, lactose, starch, whey protein concentrate, phosphates, citrates, and mixtures thereof.

3. The nutritional composition of claim 1, wherein 4 to 8% of the total energy of the composition comes from linoleic acid, 1 to 2% of the total energy of the composition comes from α-linolenic acid, 10% or less of the total energy of the composition comes from polyunsaturated fatty acids, 10% or less of the total energy comes from saturated fatty acids, and 1% or less of the energy comes from trans fatty acids.

## Patentansprüche

1. Ernährungszusammensetzung, wobei die Ernährungszusammensetzung eine Wachstumsmilch oder eine Säuglingsanfangsnahrung umfasst, umfassend:
eine Proteinquelle,
eine Kohlenhydratquelle und
eine Lipidquelle, wobei die Lipidquelle eine Creamer-Zusammensetzung umfasst, wobei die Creamer-Zusammensetzung ferner eine Pflanzenölmischung umfasst, die bis zu 15 Gew.-% gesättigte Fettsäuren, 45 bis 75 Gew.-% einfach ungesättigte Fettsäuren, 15 bis 45 Gew.-% mehrfach ungesättigte Fettsäuren und 0,1 bis 3 Gew.-% Transfettsäuren umfasst, wobei die Pflanzenölmischung ferner 45 bis 75 Gew.-% Ölsäure, 10 bis 40 Gew.-% Linolsäure und 1 bis 15 Gew.-% α-Linolensäure umfasst;
und wobei die Ernährungszusammensetzung ferner umfasst:
0,5 bis 5 g Palmitinsäure,
0,5 bis 2 g Stearinsäure,
1 bis 10 g Ölsäure,
0,5 bis 8 g Linolsäure,
0,1 bis 2 g α-Linolensäure
und 25 bis 200 mg Docosahexaensäure pro 100 g der Ernährungszusammensetzung.

2. Ernährungszusammensetzung nach Anspruch 1, ferner umfassend einen zusätzlichen Bestandteil, ausgewählt aus der Gruppe, bestehend aus einem Träger, einem Stabilisator, einem Emulgator, einem Antioxidationsmittel, einem Verarbeitungshilfsmittel und einer Mischung davon, wobei der zusätzliche Bestandteil vorzugsweise aus der Gruppe ausgewählt ist, bestehend aus Milchproteinen, modifizierter Stärke, Kalium- oder Natriumcaseinat, Mono- oder Diglyceriden, Ascorbylpalmitat, Lecithin, gemischten Tocopherolen, Maltodextrin, Lactose, Stärke, Molkeproteinkonzentrat, Phosphaten, Citraten und Mischungen.

3. Ernährungszusammensetzung nach Anspruch 1, wobei 4 bis 8 % der Gesamtenergie der Zusammensetzung von Linolsäure stammt, 1 bis 2 % der Gesamtenergie der Zusammensetzung von α-Linolensäure stammt, 10 % oder weniger der Gesamtenergie der Zusammensetzung von mehrfach ungesättigten Fettsäuren stammt, 10 % oder weniger der Gesamtenergie von gesättigten Fettsäuren stammt und 1 % oder weniger der Energie von Transfettsäuren stammt.

## Revendications

1. Composition nutritionnelle, la composition nutritionnelle comprenant un lait de croissance ou une formule pour nourrisson, comprenant :
une source de protéines,
une source de glucides, et
une source de lipides, dans laquelle la source de lipides comprend une composition de succédané de crème, la composition de succédané de crème comprenant en outre un mélange d'huiles végétales comprenant jusqu'à 15 % en poids d'acides gras saturés, 45 à 75 % en poids d'acides gras monoinsaturés, 15 à 45 % en poids d'acides gras polyinsaturés et 0,1 à 3 % en poids d'acides gras trans, le mélange d'huiles végétales comprenant en outre 45 à 75 % en poids d'acide oléique, 10 à 40 % en poids d'acide linoléique et 1 à 15 % en poids d'acide α-linolénique ;
et en outre la composition nutritionnelle comprenant :
0,5 à 5 g d'acide palmitique,
0,5 à 2 g d'acide stéarique,
1 à 10 g d'acide oléique,
0,5 à 8 g d'acide linoléique,
0,1 à 2 g d'acide α-linolénique,
et 25 à 200 mg d'acide docosahexaénoïque pour 100 g de la composition nutritionnelle.

2. Composition nutritionnelle selon la revendication 1, comprenant en outre un ingrédient supplémentaire choisi dans le groupe constitué par un excipient, un stabilisant, un émulsifiant, un antioxydant, un auxiliaire de mise en oeuvre et un mélange de ceux-ci, de préférence dans laquelle l'ingrédient supplémentaire est choisi dans le groupe constitué par les protéines de lait, l'amidon modifié, la caséinate de potassium ou de sodium, les mono- ou diglycérides, le palmitate d'ascorbyle, la lécithine, les mélanges de tocophérols, la maltodextrine, le lactose, l'amidon, le concentré de protéines du lactosérum, les phosphates, les citrates et leurs mélanges.

3. Composition nutritionnelle selon la revendication 1, dans laquelle 4 à 8 % de l'énergie totale de la composition proviennent de l'acide linoléique, 1 à 2 % de l'énergie totale de la composition proviennent de l'acide α-linolénique, 10 % ou moins de l'énergie totale de la composition proviennent d'acides gras polyinsaturés, 10 % ou moins de l'énergie totale proviennent d'acides gras saturés et 1 % ou moins de l'énergie provient d'acides gras trans.
